Europäisches Patentamt

European Patent Office

Office européen des brevets

(19)

(11) Veröffentlichungsnummer: **0 265 024**
**B1**

(12) **EUROPÄISCHE PATENTSCHRIFT**

(45) Veröffentlichungstag der Patentschrift:
18.07.90

(21) Anmeldenummer: 87202019.3

(22) Anmeldetag: 20.10.87

(51) Int. Cl.⁵: **C03B 37/012**, C03B 19/00,
C03B 8/00, C03B 20/00

(54) Verfahren zur Herstellung von Formkörpern aus Keramik oder Glas.

(30) Priorität: **22.10.86 DE 3635842**

(43) Veröffentlichungstag der Anmeldung:
**27.04.88 Patentblatt 88/17**

(45) Bekanntmachung des Hinweises auf die Patenterteilung:
**18.07.90 Patentblatt 90/29**

(84) Benannte Vertragsstaaten:
**DE FR GB**

(56) Entgegenhaltungen:
EP-A- 0 196 716
EP-A- 0 197 586

(73) Patentinhaber: **Philips Patentverwaltung GmbH,
Wendenstrasse 35 Postfach 10 51 49,
D-2000 Hamburg 1(DE)**

(84) Benannte Vertragsstaaten: **DE**

(73) Patentinhaber: **N.V. Philips' Gloeilampenfabrieken,
Groenewoudseweg 1, NL-5621 BA Eindhoven(NL)**

(84) Benannte Vertragsstaaten: **FR GB**

(72) Erfinder: **Knauff, Karl-Georg, Dr.rer.nat.,
Lothringerstrasse 66, D-5100 Aachen(DE)**
Erfinder: **Schmidl, Benno, Clara-Viebig-Strasse 48,
D-5107 Simmerath-Lammersdorf(DE)**

(74) Vertreter: **Nehmzow-David, Fritzi-Maria et al, Philips
Patentverwaltung GmbH
Wendenstrasse 35 Postfach 10 51 49,
D-2000 Hamburg 1(DE)**

## Beschreibung

Die Erfindung betrifft ein Verfahren zur Herstellung von Formkörpern aus Keramik oder Glas, bei dem aus dem Ausgangsmaterial für den Formkörper in Form einer plastischen Masse, bestehend aus hochdispersen Feststoffteilchen und Wasser als Dispergierflüssigkeit und erforderlichenfalls Bindemittel ein Grünkörper geformt und anschließend getrocknet und gesintert wird.

Ein derartiges Verfahren ist beispielsweise aus EP-A2 0 197 586 bekannt.

Keramische Formkörper oder Formkörper aus Glas können aus plastischen, höherviskosen Massen hergestellt werden, die zunächst verformt, dann getrocknet und anschließend gesintert werden.

Das Trocknen von Grünkörpern aus derartigen Massen ist stets problematisch, da während des Trocknens eine Schwindung stattfindet, die zu mechanischen Spannungszuständen und infolgedessen zu Rißbildung im Formkörper führt. Dabei wird die mechanische Verspannung des Grünkörpers letztlich verursacht durch Grenzflächenspannungen, die von Flüssigkeitslamellen ausgehen, welche sich intermediär während des Trocknens zwischen den einzelnen Feststoffpartikeln des Grünkörpers ausbilden. Die absolute Größe der auftretenden mechanischen Spannungen wird dabei bestimmt durch den während des Trockenverlaufes sich ausbildenden Konzentrationsgradienten der flüssigen Phase, sowie durch die Größe der Grenzflächen-(Oberflächen-) Spannungen. Zur Vermeidung von Trocknungsrissen ist es daher im allgemeinen erforderlich, möglichst langsam zu trocknen, also möglichst kleine Konzentrationsgradienten der flüssigen Phase anzustreben.

In der keramischen Praxis sind diese Forderungen zur Vermeidung von Trocknungsrissen in der Regel nur mit Schwierigkeiten zu erfüllen. Eine langsame Trocknung bedingt z.B. einen erheblichen finanziellen Aufwand.

Der Erfindung liegt die Aufgabe zugrunde, ein Verfahren zur Herstellung von Formkörpern aus Keramik oder Glas der eingangs genannten Art anzugeben, mit dem eine schnelle Trocknung von Wasser als Dispergierflüssigkeit enthaltenden Grünkörpern möglich ist und mit dessen Hilfe das Risiko der Trocknungsrißbildung stark vermindert wird.

Diese Aufgabe wird erfindungsgemäß dadurch gelöst, daß der noch feuchte Grünkörper vollständig in eine mit Wasser mischbare organische Flüssigkeit, die eine niedrigere Oberflächenspannung sowie eine niedrigere Verdampfungsenthalpie als Wasser hat, solange eingetaucht wird, bis das Wasser im Grünkörper durch die organische Flüssigkeit infolge Diffusion mindestens weitgehend ersetzt ist.

Nach vorteilhaften Weiterbildungen des Verfahrens nach der Erfindung werden als organische Flüssigkeiten zum Austausch des als Dispergierflüssigkeit eingesetzten Wassers in der plastischen Masse Äthanol oder Dimethylketon (Aceton) eingesetzt.

Hierbei wird die wässerige Phase im eingetauchten Grünkörper infolge Diffusion durch die organische Phase ersetzt, ohne daß dabei zur Rißbildung führende Kräfte durch die Wirkung von Oberflächenspannungen erzeugt werden, da bei diesem Flüssigkeitsaustausch keine Grenzflächen zwischen einer gasförmigen und einer flüssigen Phase vorhanden sind, wie es bei einem Trockenprozeß z.B. in Luft der Fall ist. Der anschließende Trockenvorgang des Grünkörpers verläuft dann wegen der kleineren Verdampfungsenthalpie der gegen das Wasser im Grünkörper ausgetauschten organischen Flüssigkeit schneller als bei einem Wasserhaltigen Grünkörper und die hierbei im Grünkörper erzeugten schädlichen mechanischen Spannungen sind wegen der niedrigeren Oberflächenspannung der gegen das Wasser im Grünkörper ausgetauschten organischen Flüssigkeit ebenfalls geringer.

Nach weiteren vorteilhaften Ausgestaltungen des Verfahrens nach der Erfindung werden als Bindemittel für die plastische Masse wasserlösliche organische Polymere, insbesondere Methylcellulose oder Polyvinylalkohol, eingesetzt. Derartige Bindemittel sind in der erfindungsgemäß angewandten flüssigen Phase im Grünkörper in Form einer organischen Flüssigkeit, die eine niedrigere Oberflächenspannung sowie eine niedrigere Verdampfungsenthalpie als Wasser besitzt, schwer löslich. In diesem Fall erfolgt während des Wasseraustausches durch Diffusion eine Ausfällung des Bindemittels, wodurch eine Härtung und Verfestigung des Grünkörpers bereits im nassen, noch eingetauchten Zustand bewirkt wird. Beim nachfolgenden Trocknen ist der Grünkörper dann durch das ausgefällte Bindemittel bereits so stark stabilisiert, daß in der Regel keine Rißbildung mehr auftritt. Diese beschriebenen Ergebnisse können durch dilatometrische Messungen der Schwindung kontrolliert werden.

Mit dem erfindungsgemäßen Verfahren ergeben sich die Vorteile, daß Grünkörper aus hochgefüllten wässerigen Suspensionen beim Einbringen in die organische Flüssigkeit keine Schwindung und sogar eine geringfügige Quellung zeigen, wenn sie zusätzlich noch Bindemittel enthalten. Grünkörper selbst mit kleiner Feststoffkonzentration schwinden während des Wasseraustausches durch die organische Flüssigkeit nur zu einem Bruchteil der totalen Trockenschwindung.

In den folgenden Ausführungsbeispielen wird die Herstellung von Glaskörpern beschrieben. Das erfindungsgemäße Verfahren ist selbstverständlich auch für die Herstellung von Formkörpern geeignet, die aus plastischen keramischen Massen mit Wasser als Dispergierflüssigkeit und gegebenenfalls Bindemittel hergestellt, getrocknet und gesintert werden.

### Beispiel I

Eine homogenisierte Strangpreßmasse, bestehend aus 63 Gew.% hochdispersen $SiO_2$-Partikeln mit einem mittleren Korndurchmesser von 40 nm, 4,6 Gew.% Bindemittel, hier Polyvinylalkohol, und 32,8 Gew.% Wasser als Dispergierflüssigkeit wird aus einer Strangpresse mit einer Geschwindigkeit von 1,5 m/min bei einem Preßdruck von 160 bar in ein mit einer organischen Flüssigkeit zum Austausch des Wassers im Grünkörper gefülltes zylindrisches Gefäß extrudiert. Im Fall dieses Ausführungsbeispiels ist der extrudierte Grünkörper ein Rohr von 30 mm Außendurchmesser und einer Wandstärke von 5 mm, und die organische Flüssigkeit zum Austausch·des Wassers besteht aus Äthanol. Die zum AlkoholWasser-Austausch benötigte Verweilzeit beträgt bei den genannten Rohrabmessungen etwa 2 h. Anschließend kann der Formkörper ohne die Gefahr der Rißbildung frei an Luft weitergetrocknet werden. Die Trockenzeiten sind von der Temperatur und dem Ausmaß der Luftbewegung abhängig. Typischerweise wird nach dem Austausch des Wassers durch Äthanol nur 1/4 an Trockenzeit im Vergleich zu einer unbehandelten Probe benötigt, bei der das in ihr enthaltende Wasser nicht ausgetauscht wurde.

Um einen hochreinen Quarzglaskörper zu erhalten, wird der getrocknete Grünkörper über eine Dauer von 100 min auf eine Temperatur von 800 °C erhitzt und zur Entfernung von Verunreinigungen über eine Dauer von 1,5 h einem mit $SOCl_2$ gesättigten $O_2$-Gasstrom ausgesetzt. Die anschließende Sinterung erfolgt bei 1500 °C in Heliumatmosphäre mit 2 Vol% Chlorgaszusatz, wobei der Grünkörper mit einer Absenkgeschwindigkeit von 10 mm/min durch den Ofen geführt wird. Es wurde ein transparentes gerades Glasrohr eines Außendurchmessers von 24 mm und einer Wandstärke von 4 mm erhalten, das Verunreinigungen, insbesondere Wasser und Übergangsmetalle, nur noch in einer Menge < 50 ppb enthielt. Der Glaskörper hatte eine Dichte von 2,20 g/cm³ und einen Brechungsindex n D= 1,4591 und war blasen- und schlierenfrei.

Es kann jedoch auch so verfahren werden, daß als Bindemittel beispielsweise Methylcellulose eingesetzt wird.

Beispiel II

Eine wie in Beispiel I beschrieben hergestellte Strangpreßmasse wird zu einem Rohr wie unter Beispiel I beschrieben verpreßt. Als organische Flüssigkeit zum Austausch des Wassers im Grünkörper wird Dimethylketon (Aceton) benutzt. Hier verkürzt sich die Trockenzeit des Grünkörpers um einen Faktor von ≈ 8 gegenüber einer Vergleichsprobe, in welcher das in ihr enthaltene Wasser nicht durch eine organische Flüssigkeit mit einer niedrigeren Oberflächenspannung sowie einer niedrigeren Verdampfungsenthalpie als Wasser ausgetauscht wurde. Die weiteren Verfahrensschritte zur Herstellung eines hochreinen blasen- und schlierenfreien Glasrohres entsprechen denen gemäß Beispiel I.

Die mit dem erfindungsgemäßen Verfahren herstellbaren Glaskörper sind insbesondere geeignet zur Fertigung von Vorformen für optische Wellenleiter aus Quarzglas. Optische Wellenleiter werden für eine Vielzahl von Anwendungszwecken eingesetzt, so z.B. für Lichtübertragungseinrichtungen oder für Lichtübertragungssysteme, wie optische Kommunikationssysteme, und bestehen überwiegend aus einem nahezu wasserfreien Glas mit hohem Siliciumdioxidgehalt (das erforderlichenfalls ein Dotierungsmittel zur Einstellung des Brechungsindex des Glases enthält).

Gläser, die für optische Wellenleiter geeignet sind, sind ebenfalls mit Vorteil verwendbar für die Herstellung von Lampenkolben für Halogen- oder Gasentladungslampen, denn auch diese Gläser müssen, ebenso wie die Gläser für optische Wellenleiter, nahezu wasserfrei sein und einen hohen Siliciumdioxidgehalt aufweisen.

Dadurch, daß mit dem vorliegenden Verfahren Wasser, das als Dispergierflüssigkeit für die Aufbereitung der für die Herstellung derartiger Glaskörper eingesetzten Ausgangsmassen erforderlich ist, bereits in einem frühen Verfahrensstadium (schon im Grünkörper) nahezu vollständig ausgetauscht (also entfernt) wird, ergeben sich für die Herstellung höchstreiner Spezialgläser für die oben erwähnten Anwendungszwecke ganz besondere Vorteile.

**Patentansprüche**

1. Verfahren zur Herstellung von Formkörpern aus Keramik oder Glas, bei dem aus dem Ausgangsmaterial für den Formkörper in Form einer plastischen Masse, bestehend aus hochdispersen Feststoffteilchen und Wasser als Dispergierflüssigkeit und erforderlichenfalls Bindemittel ein Grünkörper geformt und anschließend getrocknet und gesintert wird, dadurch gekennzeichnet, daß der noch feuchte Grünkörper vollständig in eine mit Wasser mischbare organische Flüssigkeit, die eine niedrigere Oberflächenspannung sowie eine niedrigere Verdampfungsenthalpie als Wasser hat, solange eingetaucht wird, bis das Wasser im Grünkörper durch die organische Flüssigkeit infolge Diffusion mindestens weitgehend ersetzt ist.

2. Verfahren nach Anspruch 1, dadurch gekennzeichnet, daß als organische Flüssigkeit Äthanol eingesetzt wird.

3. Verfahren nach Anspruch 1, dadurch gekennzeichnet, daß als organische Flüssigkeit Dimethylketon eingesetzt wird.

4. Verfahren nach mindestens einem der Ansprüche 1 bis 3, dadurch gekennzeichnet, daß für die Herstellung der plastischen Masse $SiO_2$-Partikel eines Durchmessers im Bereich von 10 bis 500 nm, vorzugsweise von 15 bis 200 nm, mit einem mittleren Teilchendurchmesser von 40 nm eingesetzt werden.

5. Verfahren nach mindestens einem der Ansprüche 1 bis 4, dadurch gekennzeichnet, daß als plastische Masse eine Strangpreßmasse mit einem Feststoff:Dispergierflüssigkeit/Bindemittel-Gewichtsverhältnis von 1:0,5 bis 1:0,7 eingesetzt wird.

6. Verfahren nach mindestens einem der Ansprüche 1 bis 5, dadurch gekennzeichnet, daß als Bindemittel für die plastische Masse wasserlösliche organische Polymere eingesetzt werden.

7. Verfahren nach Anspruch 6, dadurch gekennzeichnet, daß als Bindemittel für die plastische Masse Methylcellulose eingesetzt wird.

8. Verfahren nach Anspruch 6, dadurch gekennzeichnet, daß als Bindemittel für die plastische Masse Polyvinylalkohol eingesetzt wird.

9. Verfahren nach einem der Ansprüche 1 bis 8, dadurch gekennzeichnet, daß die hergestellten Glaskörper als Vorform für optische Wellenleiter verwendet werden.

10. Verfahren nach einem der Ansprüche 1 bis 8, dadurch gekennzeichnet, daß die hergestellten Glaskörper als Vorform für Lampenkolben, insbesondere für Halogen- oder Gasentladungslampen, verwendet werden.

**Revendications**

1. Procédé pour la fabrication de corps de forme en céramique ou en verre, selon lequel un semiproduit est formé à partir du matériau de départ pour le corps de forme sous forme d'une masse plastique, constituée par des particules de matière solide très dispersées et de l'eau comme dispersant et, au besoin, un liant, est ensuite séché et fritté, caractérisé en ce que le semiproduit toujours humide est immergé complètement dans un liquide organique miscible à l'eau présentant une tension superficielle plus basse ainsi qu'une enthalpie d'évaporation plus faible que l'eau jusqu'à ce que l'eau contenue dans le semiproduit soit au moins largement remplacée par le liquide organique par suite de diffusion.

2. Procédé selon la revendication 1, caractérisé en ce que comme liquide organique, on utilise de l'éthanol.

3. Procédé selon la revendication 1, caractérisé en ce que comme liquide organique, on utilise de la diméthylcétone.

4. Procédé selon au moins l'une des revendications 1 à 3, caractérisé en ce que pour la préparation de la masse plastique, on utilise des particules de SiO$_2$ d'un diamètre situé dans la gamme de 10 à 500 nm, de préférence de 15 à 200 nm, le diamètre moyen des particules étant de 40 nm.

5. Procédé selon au moins l'une des revendications 1 à 4, caractérisé en ce que comme masse plastique on utilise une masse d'extrusion présentant un rapport en poids substance solide: dispersant/liant de 1:0,5 à 1:0,7.

6. Procédé selon au moins l'une des revendications 1 à 5, caractérisé en ce que comme liant pour la masse plastique, on utilise des polymères organiques solubles dans l'eau.

7. Procédé selon la revendication 6, caractérisé en ce que comme liant pour la masse plastique, on utilise de la méthylcellulose.

8. Procédé selon la revendication 6, caractérisé en ce que comme liant pour la masse plastique, ou utilise de l'alcool polyvinylique.

9. Procédé selon l'une des revendications 1 à 8, caractérisé en ce que les corps en verre réalisés sont utilisés comme préformes pour les guides d'ondes optiques.

10. Procédé selon au moins l'une des revendications 1 à 8, caractérisé en ce que les corps en verre fabriqués sont utilisés comme préformes pour des ampoules de lampe, notamment des lampes à décharge dans le gaz ou à halogène.

**Claims**

1. A method of manufacturing shaped bodies from ceramics or glass, in which a green body is formed from the starting material for the shaped body in the form of a plastic mass consisting of microdispersed solid particles and water as a dispersing liquid and, if necessary, a binder, after which said green body is dried and sintered, characterized in that the still wet green body is immersed in a water-miscible organic liquid having a lower surface tension and a lower enthalpy of vaporization than water, until the water in the green body has at least been substantially replaced by the organic liquid due to diffusion.

2. A method as claimed in Claim 1, characterized in that ehtanol is used as an organic liquid.

3. A method as claimed in Claim 1, characterized in that dimethyl ketone is used as an organic liquid.

4. A method as claimed in at least one of the Claims 1 up to and including 3, characterized in that SiO$_2$ particles having a diameter in the range from 10 to 500 nm, preferably from 15 to 200 nm, having an average particle diameter of 40 nm are used for the manufacture of the plastic mass.

5. A method as claimed in at least one of the Claims 1 up to and including 4, characterized in that an extrusion mass having a solid: dispersing liquid/binder weight ratio from 1:0.5 to 1:0.7 is used as a plastic mass.

6. A method as claimed in at least one of the Claims 1 up to and including 5, characterized in that water-soluble organic polymers are used as binders for the plastic mass.

7. A method as claimed in Claim 6, characterized in that methyl cellulose is used as a binder for the plastic mass.

8. A method as claimed in Claim 6, characterized in that polyvinyl alcohol is used as a binder for the plastic mass.

9. A method as claimed in any one of the claims 1 up to and including 8, characterized in that the glass bodies manufactured are used as preforms for optical waveguides.

10. A method as claimed in any one of the Claims 1 up to and including 8, characterized in that the glass boides manufactured are used a spreforms for lamp envelops, in particular, for halogen lamps or gas-discharge lamps.